# FASCICULE DE BREVET EUROPEEN

(11) **EP 3 426 917 B1**
(45) Date de publication et mention de la délivrance du brevet: **13.11.2019**
(21) Numéro de dépôt: 17713351.9
(22) Date de dépôt: 07.03.2017
(51) Int. Cl.: F03D 9/00, F03D 3/00, F03D 3/02, F03D 3/04, F03D 3/06, F03D 9/30

(54) **EOLIENNE FLOTTANTE A TURBINES JUMELLES A AXE VERTICAL A RENDEMENT AMELIORE**
SCHWIMMENDE WINDTURBINE MIT ZWEI HOCHACHSENTURBINEN MIT VERBESSERTEM WIRKUNGSGRAD
FLOATING WIND TURBINE HAVING TWIN VERTICAL AXIS TURBINES WITH IMPROVED EFFICIENCY

(30) Priorité: 08.03.2016 FR 1651913
(43) Date de publication de la demande: 16.01.2019
(73) Titulaire: Centre National de la Recherche Scientifique, 75794 Paris Cedex 16 (FR)
(72) Inventeur: ACHARD, Jean-Luc, 38100 Grenoble (FR)
(74) Mandataire: IPAZ
(86) Numéro de dépôt international: PCT/FR2017/050505
(87) Numéro de publication internationale: WO 2017/153676

(56) Documents cités:
- WO-A1-2013/175123
- WO-A1-2013/175123
- US-A1- 2011 236 181
- US-A1- 2011 236 181

## Description

### Domaine

La présente invention concerne une éolienne flottante, notamment pour une utilisation au large des côtes.

### Exposé de l'art antérieur

La plupart des éoliennes installées sur la terre ferme comprennent des turbines à flux axial comportant généralement trois pales et dont l'axe de rotation est parallèle à la direction du vent incident qui atteint l'éolienne. Ces éoliennes sont appelées HAWT (sigle anglais pour Horizontal-Axis Wind Turbine). Les pales sont maintenues par une nacelle à l'extrémité supérieure d'un mât. Les autres éoliennes terrestres comprennent des turbines à flux transverse dont l'axe de rotation est perpendiculaire à la direction du vent, et agencé horizontalement et le plus souvent verticalement, et appelées VAWT (sigle anglais pour Vertical-Axis Wind Turbine). Les pales des éoliennes entraînent en rotation un arbre qui entraîne à son tour un générateur électrique (également appelé génératrice).

Une tendance actuelle est à l'installation d'éoliennes au large des côtes car le vent y est plus intense et plus constant. Les éoliennes marines actuellement en activité comprennent essentiellement des turbines à flux axial. L'extrémité inférieure du mât maintenant la turbine à flux axial est fixée au fond marin à des profondeurs inférieures à 50-60 m, via divers systèmes adaptés à la nature du sol. Toutefois, les sites à faible profondeur sont en nombre limité et il est donc souhaitable de concevoir des éoliennes marines, appelées éoliennes flottantes, comportant une structure de support flottante qui est reliée au fond marin par un système d'ancrage.

Bien des concepts d'éoliennes flottantes proposés utilisent des HAWT. Ce choix rassure car il s'inscrit dans la continuité des solutions adoptées pour l'éolien terrestre ou marin posé. Il peut toutefois être contesté car les HAWT paraissent mal adaptées à l'éolien marin flottant pour plusieurs raisons. L'une des raisons est que la nacelle, qui contient les organes de transmission de puissance (avec éventuellement une boite de vitesse servant de multiplicateur), la génératrice et la salle de commande, est placée en haut du mât. Le positionnement haut perché en haut du mât de la nacelle (à la différence des VAWT où le contenu de la nacelle se trouve logé au voisinage de la surface de l'eau ou même sous l'eau) rend (a) la maintenance difficile en mer à cause d'un accès mal aisé (b) la stabilité verticale en tangage et en roulis plus difficile à compenser par la plateforme à cause du poids importants des organes pesants que sont la génératrice et le multiplicateur et (c) une installation plus difficile demandant des grues de grandes tailles.

En outre, les HAWT requièrent des régulations supplémentaires comme (d) une régulation aérodynamique en lacet dont le servomécanisme est aussi perché à l'extrémité supérieure du mât au raccord avec la nacelle alors que les VAWT sont insensibles au sens du vent et (e) une régulation thermique (génératrice, multiplicateur) dans la nacelle, cette fonction pouvant être critique à cause des variations importantes de température à cette altitude en mer loin de l'influence stabilisatrice de l'eau. Enfin, (f) les pales des HAWT sont soumises à des sollicitations de charge gravitationnelle cyclique résultant de l'augmentation de leur poids lors de la montée en puissance des éoliennes flottantes. Cette montée résulte de l'optimisation des coûts de ce type d'éolien. Il en résulte ainsi des difficultés de changement d'échelle dans la conception.

Il semble plus avantageux de développer des éoliennes flottantes utilisant des VAWT au lieu de HAWT. De nombreux exemples de VAWT ont été décrits. Parmi ces exemples, les turbines verticales de type Savonius, classées dans les VAWT, mais fonctionnant sur un principe de trainée différentielle entres pales opposées, ne sont pas ici considérées car incompatibles à cause de leur très faibles rendements avec des projets dans l'éolien flottant pour lesquels les niveaux de puissance doivent être très élevés afin de justifier les coûts d'installation et de maintenance. Des VAWT d'un second type fonctionnent en revanche sur un principe de portance sur une pale unique et se divisent en turbines Darrieus avec des pales de forme troposkine ou en turbines en H avec des pales droites ou hélicoïdales, voire en V. A titre d'exemple, le document WO2009/036107 décrit une VAWT flottante comportant une turbine Darrieus et le document WO2010/120182 décrit une VAWT flottante composée d'une turbine en H avec des pales droites. Un autre exemple d'une VAWT flottante est connu du document WO2013/175123.

Mais nombre d'inconvénients des VAWT du second type, dont certains leur ont fait perdre la partie sur terre, subsistent et doivent être supprimés ou réduits :
(i) Il est admis que la puissance produite par des VAWT du second type bien que supérieure à celle des VAWT du premier type reste plus faible que la puissance produite par des HAWT de même taille. Plusieurs solutions ont été tentées pour réduire cet inconvénient. Les turbines en H souffrent en effet de pertes dissipatives se manifestant aux raccords bras-pales et en bout d'ailes. Le rendement optimal est alors généralement peu élevé. Ledit rendement peut être alors un peu augmenté en réduisant la trainée avec des raccords bras pales profilés à l'aide de matériau composite moulé et surtout par la mise en place d'un dispositif de réglage de l'angle d'attaque. Ledit dispositif introduit de la complexité mécanique, dans le milieu marin hostile où la maintenance doit être réduite. En revanche le rendement optimal des turbines Darrieus est nettement plus important grâce une solidité S = 2Nc/D (où N est le nombre de pales, c est la corde et D/2 est le rayon de la turbine) réduite (en dessous de 0,3) et un paramètre d'avance optimal λ = ωD/2Vᵢ (ω étant la vitesse angulaire de rotation de la turbine et Vᵢ étant la vitesse du vent incident) élevée (au-dessus de 4). La puissance récoltée, proportionnelle au maitre couple de la turbine, est faible à moins d'augmenter ce maitre couple. Cela implique d'augmenter fortement la hauteur du mât, ce qui est un lourd handicap pour des machines dont la tenue est assurée par des haubans.
(ii) Les démarrages peuvent s'avérer difficiles, les pales restant immobilisées dans des positions angulaires données.
(iii) Les forces aérodynamiques tangentielles et normales exercées sur chaque pale lors de chaque révolution de la turbine sont pulsatoires. Elles sont transmises le long des bras de liaison et ensuite sur l'arbre d'entrainement de la turbine. Au pied de cet arbre, un moment de flexion oscillant dû notamment à la composante normale des forces en résulte qui entraine beaucoup de fatigue sur les structures. Ce moment possède deux composantes :
   - une première composante qui tend à faire pencher l'éolienne d'avant en arrière ou inversement parallèlement à la direction du vent, et appelée moment de flexion "va-et-vient" ; et
   - une deuxième composante qui tend à faire pencher l'éolienne de gauche à droite ou inversement dans un plan perpendiculaire à la direction du vent, et appelée moment "d'un côté à l'autre".

Il est connu que la juxtaposition de turbines jumelles contrarotatives permet de définir des turbomachines supprimant ou atténuant les inconvénients (i) (ii) et (iii). De telles turbomachines conçues d'abord pour des applications terrestres sont majoritairement équipées de VAWT du premier type, et quelques-unes équipées de VAWT du second type. Un désavantage de la juxtaposition de turbines jumelles est inversement de perdre l'insensibilité des VAWT uniques à la direction du vent incident : une régulation en lacet devient nécessaire. On peut remarquer le document US8827631 qui décrit une hydrolienne avec turbines de ce second type et le document WO2013/175123 qui décrit une éolienne avec turbines de ce second type flanquée de carénages latéraux et soutenue par un montant central, composants employant beaucoup de matériau ; la régulation aérodynamique qui équipe cette dernière étant également volumineuse. Elle ne peut donc suivre la montée en puissance des éoliennes flottantes.

Il serait donc souhaitable de proposer une éolienne flottante comprenant des turbines jumelles qui atténue, voire supprime, certains des défauts évoqués précédemment tout en étant économe en matériau.

En outre, les éoliennes flottantes étant éloignées du rivage, les solutions envisagées doivent rester simples pour limiter les interventions coûteuses.

### Résumé

Un objet d'un mode de réalisation est de pallier tout ou partie des inconvénients mentionnés précédemment des éoliennes flottantes formées de turbines jumelles.

Un autre objet d'un mode de réalisation est d'augmenter le rendement de telles éoliennes sans utiliser trop de matériau.

Un autre objet d'un mode de réalisation est d'amortir, les variations de charges normales qui s'exercent sur les liaisons pivot des turbines au cours de leur rotation.

Un autre objet d'un mode de réalisation est d'assurer de manière passive, grâce à l'architecture de l'éolienne, son orientation face au vent de manière à ce qu'aucune commande en lacet ne soit nécessaire.

Ainsi, un mode de réalisation prévoit une éolienne flottante comprenant une plateforme flottante et une turbomachine reposant sur la plateforme, la turbomachine comprenant :
- des première et deuxième turbines à flux transverse disposées de façon symétrique par rapport à un premier plan, chaque turbine composées de pales comprenant des parties centrales et des bras, les parties centrales décrivant en rotation des cylindres et se prolongeant aux extrémités par les bras, les bras étant, en outre, reliés à des éléments d'arbre par des liaisons pivotantes, chaque turbine étant soutenue par deux carénages horizontaux supérieur et inférieur munis de structure de support, ne comprenant pas d'arbre ;
- une structure de maintien des turbines composée d'un système formé par lesdits carénages supérieur et inférieur reliés à un pylône médian vertical entre les turbines et en amont par rapport à la direction du vent d'un deuxième plan contenant les axes de rotation des pales des turbines.

Selon un mode de réalisation, la turbomachine est adaptée à pivoter par rapport à la plateforme flottante autour d'un axe de pivotement situé en amont du deuxième plan par rapport à la direction du vent.

Selon un mode de réalisation, les bras sont perpendiculaires aux axes de rotation des pales.

Selon un mode de réalisation, la partie centrale de chaque pale est reliée à chaque bras correspondant par une portion coudée suivant un quart de cercle.

Selon un mode de réalisation, la partie centrale de chaque pale est droite.

Selon un mode de réalisation, la partie centrale de chaque pale possède une flèche d'angle d'inclinaison faible (<5°) tout en restant inscrite dans le cylindre que décrit la turbine lors de sa rotation.

Selon un mode de réalisation, pour chaque pale, la hauteur de la partie centrale de la pale mesurée parallèlement à l'axe de rotation de la pale, est supérieure ou égale au 2/3 de la hauteur, mesurée parallèlement à l'axe de rotation de la pale, entre les deux bras reliés à la partie centrale de la pale.

Les carénages horizontaux sont:
- soit munis d'une première classe de structure de support, l'ensemble étant alors appelé carénage-MMESS (Moderately Material Efficient Supporting Structure) permettant de loger et de masquer au vent incident les bras, les éléments d'arbre et les moyeux étant totalement logés à l'intérieur des carénages. Selon un mode de réalisation, chaque carénage-MMESS comprend un logement partiellement fermé par un capot fixé à l'élément d'arbre du carénage, une ouverture annulaire étant laissée entre le pourtour du capot et le reste du carénage pour le passage des pales de la turbine. Selon un mode de réalisation, chaque carénage-MMESS loge une fraction, variant entre la moitié et la totalité, des portions coudées des pales de la turbine. Ainsi ledit carénage possède une envergure qui peut varier du diamètre de la turbine à une fraction de celui-ci en relation avec la fraction de la partie coudée qu'il loge. Selon un mode de réalisation les carénages-MMESS, sont également reliés à un montant-dérive dans le premier plan médian en aval du deuxième plan par rapport à la direction du vent; ou bien
- les carénages horizontaux sont munis d'une deuxième classe de structure de support, l'ensemble étant alors appelé carénage-HMESS (Highly Material Efficient supporting structure) laissant au vent incident les bras, les éléments d'arbre et les moyeux étant partiellement logés à l'intérieur des carénages. Chaque carénage-HMESS est formé par une demi-aile (droite, en flèche, trapézoïdale, elliptique...) à l'extrémité et au sein de laquelle est aménagée une liaison pivotante comprenant un moyeu tournant se prolongeant à l'extérieur de la demi-aile et sur lequel viennent se rattacher extérieurement les pales de la turbine via un disque tournant solidaire du moyeu. Ladite demi-aile possède une envergure qui s'étend juste au-delà des éléments de la liaison pivotante.

Selon un mode de réalisation, chaque carénage-MMESS de l'éolienne flottante comprend, en outre, pour chaque turbine, un montant latéral vertical du côté de la turbine opposé au premier plan et reliant les carénages supérieur et inférieur de la turbine.

Selon un mode de réalisation, chaque carénage-MMESS comprend un tube annulaire relié par un premier tube de structure au pylône médian et par un deuxième tube de structure au montant-dérive.

Selon un mode de réalisation, chaque carénage-HMESS, comprend un tube annulaire de structure allongé suivant l'envergure de chaque demi-aile et à proximité du bord d'attaque reliant le pylône médian à la liaison pivot.

Selon un mode de réalisation, chaque turbine comprend une ligne de traction diagonale qui relie chaque pale, à partir d'un point situé dans la moitié supérieure de la pale, à un composant tournant de la liaison pivot supérieure de la turbine et une seconde ligne de traction diagonale qui relie chaque pale, à partir d'un point situé dans la moitié inférieure de la pale, à un composant tournant de la liaison pivot inférieure de la turbine.

Selon un mode de réalisation, chaque turbine comprend une ligne de traction horizontale reliant chaque pale de la turbine aux autres pales de la turbine via un noeud commun placé sur l'axe de rotation la turbine à une hauteur située au voisinage de la moitié de la pale.

Selon un mode de réalisation, chaque turbine comprend une génératrice électrique entraînée par les pales de la turbine et logée dans le carénage inférieur de la turbine.

Selon un mode de réalisation, la génératrice est une génératrice synchrone à aimants permanents à attaque directe.

Selon un mode de réalisation, la génératrice comprend un frein à disque.

Selon un mode de réalisation, des câbles d'évacuation de l'électricité produite par la génératrice et/ou de contrôle et/ou de commande de la génératrice et/ou du frein à disque sont agencés dans le tube annulaire structurel du carénage inférieur de la turbine.

Selon un mode de réalisation, les tubes annulaires structurels des carénages supérieur et inférieur de la turbine sont adaptés au passage d'un agent de maintenance.

Selon un mode de réalisation, l'éolienne flottante comprend, en outre, au moins un panneau photovoltaïque fixé à la face supérieure de l'un des carénages supérieurs.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en perspective, partielle et schématique, d'un mode de réalisation d'une éolienne flottante avec des carénages-MMESS ;
les figures 2A et 2B sont des vues éclatées, partielles et schématiques, respectivement de la partie haute et de la partie basse de l'une des turbines représentées en figure 1 ;
les figures 3A et 3B sont des vues agrandies en coupe, partielles et schématiques, de la partie haute et de la partie basse de l'une des turbines représentées en figure 1 ; et
la figure 4 est une vue en perspective, partielle et schématique d'une éolienne flottante avec des carénages-HMESS.

### Description détaillée

Seuls les éléments utiles à la compréhension de l'invention sont décrits et représentés sur les figures. Dans la suite de la description, sauf précision contraire, les expressions "approximativement", "sensiblement", et "de l'ordre de" signifient à 10 % près, de préférence à 5 % près. En outre, les termes "supérieur", "inférieur", "au-dessus", "au-dessous", "sommet" et "base" sont définis par rapport à l'axe de rotation des turbines de l'éolienne qui correspond, par exemple, sensiblement à la direction verticale.

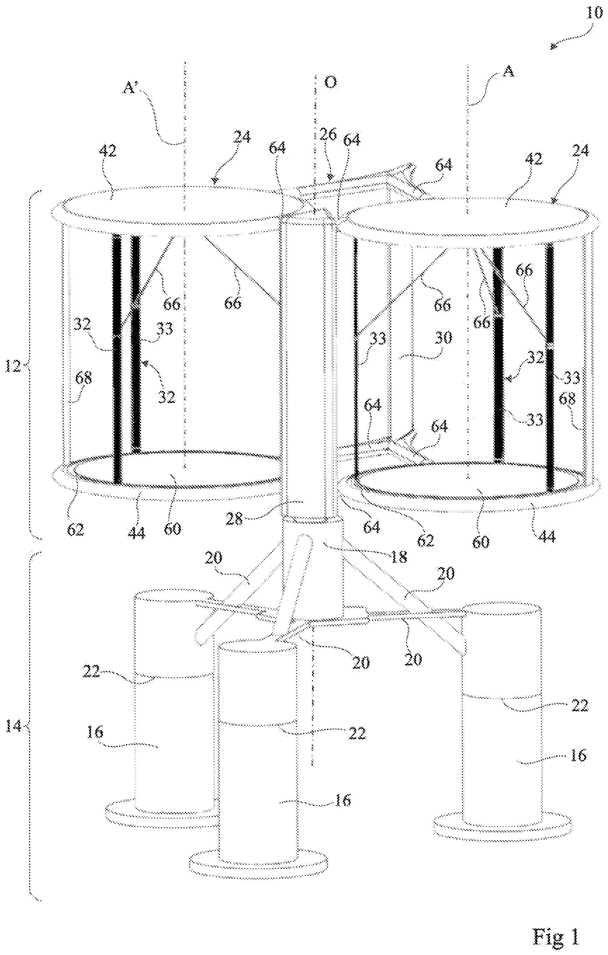

La figure 1 est une vue en perspective, partielle et schématique, d'un mode de réalisation d'une éolienne flottante 10 avec des carénages-MMESS. L'éolienne flottante 10 comprend une turbomachine émergée 12 reposant sur une plateforme flottante 14.

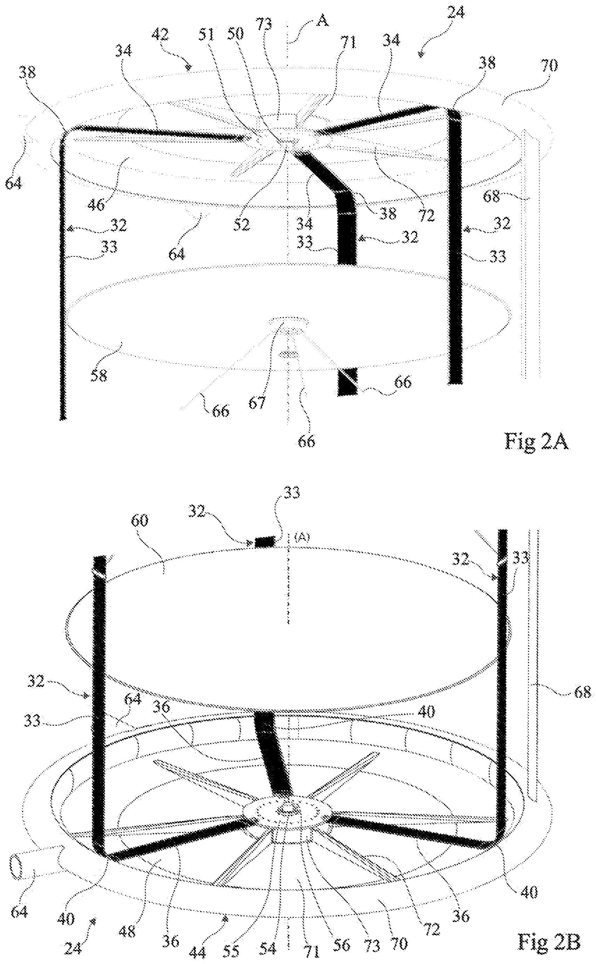

La turbomachine 12 comprend deux turbines 24 juxtaposées d'axe de rotation A et A' à flux transverse soutenue chacune par un carénage-MMESS supérieur et inférieur 42, 44, d'une structure de maintien 26, ayant la forme d'un ellipsoïde de révolution aplati autour des dits axes de rotation, lesdits carénages étant munis de structures de support (représentées en figure 2) qui sont reliés au pylône médian 28 par des tubes structurels 64 et au montant-dérive 30 vertical par des tubes structurels 64, ledit pylône et ledit montant-dérive étant contenus dans un plan vertical médian de part et d'autre duquel les deux turbines 24 sont placées symétriquement. La section du montant dérive, dans un plan perpendiculaire aux axes de rotation des turbines 24, est un profil d'aile symétrique.

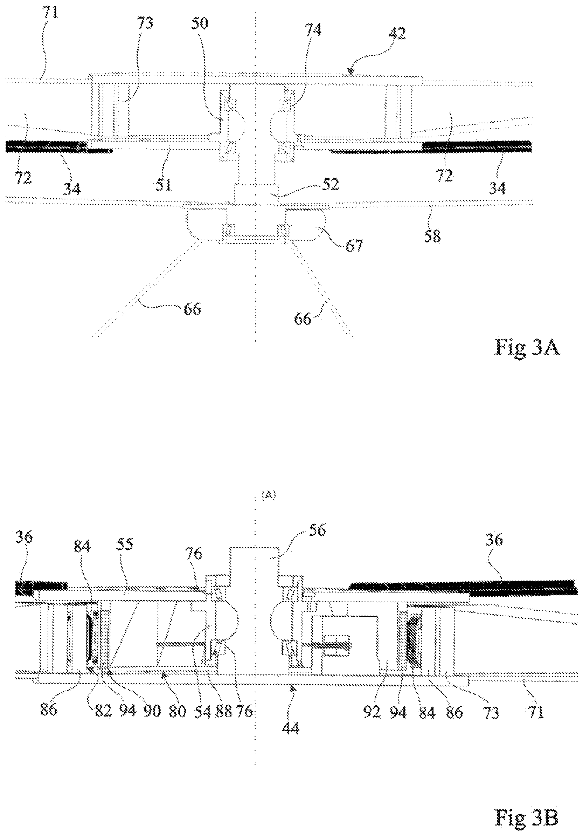

De cette manière, il devient possible de maintenir les pales 32 des turbines d'axe A et A' par une liaison pivot fixées sur les carénages-MMESS supérieur et inférieur 42, 44 qui seront détaillés dans les figures 2, 3A et 3B. Ainsi chaque turbine 24 peut se passer d'arbre comme dans les turbines à flux transverse qui ont été décrites précédemment. La fonction de maintien est ainsi assurée par le pylône médian 28 et le montant-dérive 30. Cela permet de découpler les deux moyeux d'une même turbine permettant un désalignement entre ces deux moyeux sans produire d'efforts de flexion parasite issue de la liaison-pivot supérieure vers la liaison-pivot inférieure. En particulier, cela permet d'éviter la répercussion des moments de flexion issus de la liaison-pivot supérieure vers la liaison-pivot inférieure.

Selon un mode de réalisation, le pylône 28 a une section sensiblement triangulaire, symétrique par rapport au plan médian, avec une surface amont en arc de cercle et deux faces latérales planes ou concaves se rejoignant en aval vers une ligne de fuite contenue dans le plan médian. Ce pylône dans sa partie amont se raccorde au support flottant par un mât cylindrique d'axe O et son extension en profondeur est au plus d'un demi diamètre de turbine. Selon un mode de réalisation, l'angle entre le plan contenant les axes A et A' et le plan contenant l'axe A et tangent au pylône 28, du côté amont selon la direction du vent, est inférieur ou égal à 30°.

La déformée du pylône dans le sens du vent est inversement proportionnelle au moment quadratique suivant l'axe de tangage de la turbomachine. Or de par son extension en profondeur le moment de ce pylône est bien supérieur à celui d'un mat circulaire de même maitre-couple. Ainsi le pylône est en mesure d'absorber au mieux les efforts instationnaires mécaniques et aérodynamiques longitudinaux qui lui sont transmis via les liaisons pivot des turbines.

Selon un mode de réalisation, chaque turbine 24 comprend des pales 32, qui sont au moins au nombre de deux, et à titre d'exemple au nombre de trois sur la figure 1. Les pales 32 pour la turbine 24 représentée à droite en figure 1 sont montées mobiles en rotation autour de l'axe A et les pales de la turbine 24 représentée à gauche en figure 1 sont montées mobiles en rotation autour de l'axe A'. De préférence, les axes A et A' sont parallèles. En mouvement, les pales 32 balaient des surfaces inscrites dans des cylindres de révolution de diamètre D et respectivement d'axe A pour la turbine 24 représentée à droite en figure 1 et A' pour la turbine 24 représentée à gauche en figure 1. Chaque pale 32 comprend une portion centrale 33 qui est contenue dans le cylindre de diamètre D. A titre d'exemple, la portion centrale 33 est droite et parallèle à l'axe A ou A' Dans cette figure seule la portion centrale 33 est exposée au vent mais d'autres modes de réalisation des carénages-MMESS sont envisageables comme cela sera décrit plus loin.

Les pales 32 ont des profils répartis sur ces cylindres de manière symétrique par rapport au plan médian qui sépare les cylindres. Elles ont donc un sens de rotation opposé, ce sens étant tel que les pales 32 remontent au vent dans la zone médiane. Dans un plan perpendiculaire à l'axe de rotation A ou A', la section de chaque pale 32 peut correspondre à un profil de type biconvexe symétrique ou dissymétrique, creux, ou à double courbure. Selon un mode de réalisation, le diamètre D est compris entre 20 m et 80 m.

Dans le mode de réalisation représenté en figure 1, les pales 32 de chaque turbine 24 ont une partie centrale 33 droite mais n'importe quel type de pales issues de turbines à flux transverse peut être utilisé à condition que la partie centrale 33 de la pale 32 balaie un cylindre de révolution. A titre d'exemple, la turbine peut être munie de pales dont la partie centrale est hélicoïdale ou de pales dont la partie centrale est en V, telles que décrites dans le brevet US2011006534, la flèche ne pouvant toutefois excéder 10° pour ne pas faire chuter le rendement. L'utilisation des pales hélicoïdales ou des pales en V présentent l'avantage d'uniformiser le couple fourni par les pales.

La plateforme 14 peut être semi-submersible, et correspondre à une plateforme tri-flotteur. La plateforme 14 comprend trois colonnes ou cylindres de flottaison 16 disposés en étoile. La plateforme 14 comprend, en outre, un mât central 18, d'axe O, relié aux cylindres de flottaison 16 par des barres de renfort 20. La plateforme 14 est stabilisée de manière à ce que les axes A et A' des turbines soient voisines de la position verticale assurant le maximum de puissance collectée, non seulement par la raideur hydrostatique due aux trois colonnes de flottaison 16 en étoile mais aussi par le lest, qui peut être un ballast liquide, placé dans la partie inférieure des colonnes. La répartition de liquide dans ces colonnes peut être contrôlée de sorte qu'aucun changement d'assiette sensible ne se manifeste. La plateforme 14 est maintenue en place par un système d'ancrage non représenté, comprenant par exemple des caténaires, reliées au fond marin. La plateforme tri-flotteur 14 présente de façon avantageuse un bon compromis au niveau du coût en matière première, du coût d'installation et de la tenue à la mer. D'autres types de plateformes flottantes peuvent être utilisés. Selon une variante, la plateforme 14 peut correspondre à la plateforme décrite dans le document WO2013/175124 qui est considérée comme faisant partie intégrante de la présente description. Selon une variante, la plateforme 14 peut aussi correspondre à une barge, à une plateforme "spar", ou à une plateforme à lignes tendues dite TLP. Le niveau des eaux est représenté de façon schématique par les lignes 22 en figure 1.

De préférence, la turbomachine 12 est montée sur le mât central 18 de la plateforme 14. Un système de liaison pivot, non visible en figure 1, peut suivant une variante être prévu au sommet du mât 18 pour laisser libre en rotation la turbomachine 12 par rapport à la plateforme flottante 14 autour de l'axe O, sensiblement vertical. Dans ce but le pylône 28 peut se prolonger par une portion cylindrique d'axe O qui joue le rôle de la partie male de la liaison pivot et qui pénètre dans une ouverture cylindrique d'axe O prévue dans le mât 18 et qui joue le rôle de la partie femelle de la liaison pivot. Cette liaison peut aussi être assurée par une variante d'une couronne d'orientation que l'on trouve au sommet des mats des HAWT et qui comporte un gros roulement à rouleaux.

Cette liaison pivot permet à la turbomachine de s'orienter face au vent En effet les résultantes des forces normales qu'exercent chaque turbine sur les liaisons pivot portées par les carénages-MMESS 42, 44 s'équilibrent de même que les moments qu'elles créent sur l'axe O car le positionnement des axes A et A' en aval de l'axe de rotation O tend en effet à stabiliser l'éolienne à chaque instant face au vent, sans mise en rotation.

Le montant-dérive 30, présent dans les éoliennes avec des carénages- MMESS contribue à maintenir l'axe de symétrie de la turbomachine 12 parallèle à la direction du vent en fonctionnement normal. En effet, le montant-dérive 30 joue le rôle d'un empennage avec un fort bras de levier. En conclusion et de façon avantageuse, aucune commande en lacet n'est nécessaire.

Dans un mode de réalisation simplifié où n'est pas prévu un système de liaison au sommet du mât 18, une stabilisation en lacet de l'éolienne reste envisageable. Le support flottant de plateforme 14 représenté dans la figure 1 est soumis à ce moment aérodynamique de redressement qui s'ajoute à celui des caténaires qui contrôlent ce type de support flottant en lacet.

Les figures 2A et 2B sont des vues éclatées, partielles et schématiques, respectivement de la partie haute et de la partie basse de la turbine 24 représentée à droite en figure 1. Les turbines 24 ont des structures symétriques l'une de l'autre par rapport à un plan médian. Une description plus détaillée de la turbine 24 représentée à droite en figure 1 va maintenant être faite sachant que la turbine représentée à gauche en figure 1 a une structure symétrique.

Chaque pale 32 comprend un bras supérieur 34, de préférence sensiblement perpendiculaire à l'axe A ou A', notamment horizontal, et relié à l'extrémité supérieure de la partie centrale 33 de la pale 32 et un bras inférieur 36, de préférence sensiblement perpendiculaire à l'axe A ou A', notamment horizontal, et relié à l'extrémité inférieure de la partie centrale 33 de la pale 32. Selon un mode de réalisation, pour chaque pale 32, un coude supérieur 38, ayant de préférence sensiblement la forme d'un quart de cercle de rayon R, relie la partie centrale de chaque pale 32 au bras supérieur 34 et un coude inférieur 40, ayant de préférence sensiblement la forme d'un quart de cercle de rayon R, relie la partie centrale 33 de chaque pale 32 au bras inférieur 36. La longueur L de chaque bras 34, 36 mesurée à partir de l'axe A est telle que R + L = D/2. Sur le seul plan aérodynamique, la valeur de R résulte d'un compromis visant à maximiser la puissance produite par une turbine. D'une manière générale, pour ladite turbine fonctionnant en milieu infini, un R faible accroit la surface balayée par la partie motrice 33 mais augmente la trainée d'interférence, donc la source de dissipation associée. Un optimum est à rechercher pour chaque géométrie précise de turbine (N, c, D, etc...). Une limite supérieure de R est de 1/6 de la distance, mesurée parallèlement à l'axe A, entre les bras 34 et 36 reliés à la partie centrale 33 de la pale 32 ou autrement dit la hauteur mesurée parallèlement à l'axe A de la partie centrale 33 de chaque pale 32 est supérieure ou égale à 2/3 de cette distance.

Les bras supérieurs 32 se raccordent à un moyeu supérieur 50, par l'intermédiaire d'un disque 51 percé et fixé au moyeu 50. Le moyeu supérieur 50 est monté tournant par l'intermédiaire de roulements ou de paliers visibles sur les figures 3A et 3B, autour d'un élément supérieur 52 d'arbre vertical de guidage d'axe A, l'élément supérieur d'arbre 52 étant fixé sur la face interne supérieure du carénage supérieur 42. Les bras inférieurs 36 se raccordent à un moyeu inférieur 54 par l'intermédiaire d'un disque 55 percé et fixé au moyeu 54. Le moyeu inférieur 54 est monté tournant, par l'intermédiaire de roulements ou de paliers non visibles sur ces figures, autour d'un élément inférieur 56 d'arbre vertical de guidage d'axe A, l'élément d'arbre 56 étant fixé sur la face interne inférieure du carénage inférieur 42.

Les bras 34, 36 et les coudes 38, 40 ont une forme profilée, qui peut être différente de celle des parties centrales 33 des pales 32 pour supporter l'accroissement des contraintes de cisaillement qui s'y exercent. L'épaisseur maximale de la section droite des bras 34, 36 de chaque pale 32 peut être supérieure à l'épaisseur maximale de la section droite de la partie centrale 33 de la pale 32, par exemple supérieure ou égale au double de l'épaisseur maximale de la section droite de la partie centrale 33 de la pale 32.

Selon un mode de réalisation, le profil de chaque portion coudée 38, 40 assure une transition monotone des caractéristiques du profil de la partie centrale de pale à laquelle la portion coudée est reliée aux caractéristiques du profil du bras auquel la portion coudée est reliée.

Chaque pale 32 peut être fabriquée en matériau composite utilisant des fibres de carbone. Compte tenu de l'uniformité des efforts subis pour ce qui concerne la partie centrale, une fabrication des pales en panneaux identiques peut être développée suivant ladite partie. Une fabrication en panneaux peut aussi être entreprise pour les bras supérieurs et inférieurs, les coudes supérieurs et inférieurs étant également fabriqués séparément. Ces panneaux peuvent être ensuite raccordés sur site avec des systèmes clés-fourreaux pour reconstituer la pale, allégeant les coûts de logistique et d'installation. Enfin les panneaux droits des pales peuvent être fabriqués à bas coût suivant le procédé de pultrusion.

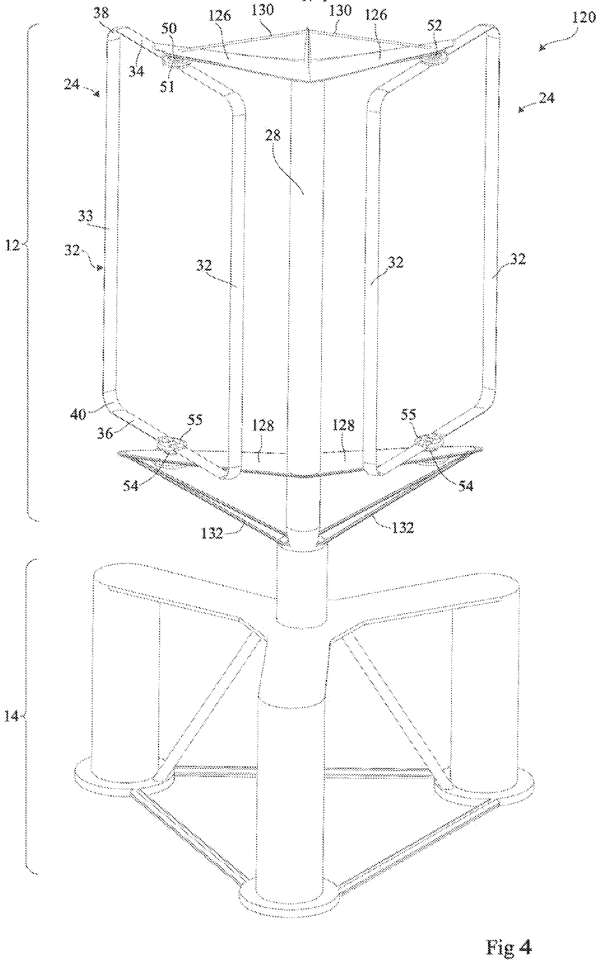

La turbine 24 qui vient d'être décrite représentée à droite en figure 1 est reliée aux carénages-MMESS inférieur et supérieur. La description, tant qu'elle se limite à la géométrie même des pales la turbine, pourrait tout autant être celle des pales d'une turbine reliée à des carénages-HMESS correspondant à un autre mode de réalisation tel que décrit dans la figure 4 et toutes les caractéristiques des pales de cette turbine énoncées ci-dessus restent valides.

Suivant un mode de réalisation, au sommet de chaque turbine 24, les bras supérieurs 34 et les coudes 38 sont logés au sein d'un logement 46 prévu dans le carénage supérieur-MESS 42 de révolution. A la base de chaque turbine 24, les bras 36 et les coudes 40 sont logés au sein d'un logement 48 prévu dans le carénage inférieur 44 de révolution.

Chaque carénage-MMESS 42, 44 comprend un tube 70 qui court le long du pourtour d'une plaque 71 sensiblement plane. Le tube 70 est relié au tube de structure 64 qui rejoint vers l'amont le pylône médian 28 et au tube de structure 64 qui rejoint vers l'aval le montant-dérive 30. Chaque carénage 42, 44 comprend également un ensemble de rainures 72 de renfort qui rayonnement à partir d'une pièce cylindrique 73 d'axe A, la pièce cylindrique, les rainures 72 et le tube 70 étant solidaires de la plaque 71.

Suivant un mode de réalisation, le carénage-MMESS supérieur 42 de la turbine 24 d'axe A comprend de plus un capot circulaire 58 d'axe A qui recouvre le logement 46 et qui est fixé sans possibilité de rotation sur l'extrémité inférieure de l'élément supérieur 52 d'arbre vertical de guidage. Une ouverture annulaire, non visible en figure 1, dont la largeur e est de trois à cinq épaisseurs des parties centrales 33 des pales 32 et le rayon égal à D/2, est ménagée entre le pourtour du logement 46 et le capot 58 pour permettre à l'extrémité supérieure de la partie centrale 33 de chaque pale 32 de pénétrer dans le logement 46 et de se raccorder au moyeu supérieur 50 via le coude 38 et le bras 34. Le diamètre Dp du capot 58 est égal à D-e.

Le carénage inférieur-MMESS 44 de la turbine 24 d'axe A comprend de plus un capot circulaire 60 d'axe A qui recouvre le logement 48 et qui est fixé sans possibilité de rotation sur l'extrémité supérieure de l'élément inférieur 56 d'arbre vertical de guidage. Une ouverture annulaire 62, visible en figure 1, dont la largeur e est de trois à cinq épaisseurs des parties centrales 33 des pales 32 et le rayon égal à D/2, est ménagée entre le pourtour du logement 48 et le capot 60 pour permettre à l'extrémité inférieure de la partie centrale 33 de chaque pale 32 de pénétrer dans le logement 48 et de se raccorder au moyeu inférieur 50 via le coude 38 et le bras 34. Le diamètre Dp du capot 60 est égal à D-e.

La turbine 24 d'axe A se déploie ainsi selon cet axe en trois zones : une zone médiane entre les deux carénages supérieur et inférieur 42, 44 dans laquelle les parties centrales 33 des pales 32, qui sont situées sur un cylindre de diamètre D, sont soumises au vent incident et sont motrices et deux zones dans les carénages supérieur et inférieur 42, 44 qui renferment les bras 34, 36, ainsi que les moyeux 50, 54. Dans ces deux dernières zones, les bras 34, 36 subissent des trainées de profils et sont sans effet moteur sur le fonctionnement de la turbine 24. Cependant ces traînées sur ces composants résultent uniquement d'un mouvement de rotation pur dans cet espace fermé car lesdits composants échappent à la composante de l'écoulement associée au vent incident qui augmenterait la trainée en l'absence des carénages-MMESS 42, 44. Cette proposition tient dans la mesure où les bras horizontaux 34 sont suffisamment distants des faces supérieure et inférieur de chaque carénage supérieur 42 et inférieur. De plus le carénage-MMESS supérieur 42 muni de son capot 58 et le carénage-MMESS inférieur 44 muni de son capot 60 jouent, pour chaque pale 32 et à chaque position angulaire de la pale 32 lors d'une révolution, le rôle que joueraient deux grandes ailettes d'extrémités (en anglais winglets) droites aux extrémités d'une aile d'avion, et diminue les trainées de bout d'aile telles qu'elles se manifestent dans les turbines Darrieus en H ou hélicoïdales.

Selon un autre mode de réalisation, il peut être avantageux que la valeur du diamètre du capot 58, 60 soit cependant inférieure à D-e pour des raisons structurelles, la réalisation d'un capot 58, 60 de grandes dimensions, restant stable en fonctionnement pour les éoliennes de grande taille, pouvant être délicate. Une fraction, disons jusqu'à la moitié des coudes peut être découverte sans augmenter pour autant les trainées d'interférence. L'avantage est de réduire le diamètre des carénages-MMESS inférieur et supérieur et des capots associés.

Le pylône assure enfin quatre fonctions aérodynamiques :
(i) La face avant arrondie du pylône 28 masque la remontée au vent des pales 32, zone suivant laquelle elles se trouvent freinées et améliore de ce fait leur performance.
(ii) Le pylône par sa présence asymétrise l'écoulement global autour de chaque turbine par rapport à un plan parallèle à l'écoulement incident et passant par l'axe de rotation. Or la symétrie de cet écoulement pour une turbine verticale en milieu infini du moins au démarrage est à l'origine des démarrages difficiles, les pales restant immobilisées dans des positions angulaires symétriques données.
(iii) Il a été montré comment le positionnement et la géométrie de ce pylône contribue de diverses façons à la stabilisation de l'éolienne face au vent, donc à son contrôle en lacet, particulièrement comme cela sera mentionné lors de l'utilisation de carénages-HMESS.
(iv) Il a également été mentionné que les pales 32 de la turbine d'axe A sont maintenues par une liaison pivot entre les carénages-MMESS supérieur et inférieur 42, 44 eux-mêmes soutenus par le pylône médian 28 de maintien. La figure 2 permet de préciser ce point en montrant comment les pales pivotent indépendamment autour des éléments d'arbre supérieur 52 et inférieur 56 et permettent à chaque turbine 24 de se passer d'arbre. L'absence d'arbre central qui résulte in fine de la fonction de maintien assurée par le pylône médian 28 empêche également que des tourbillons, notamment des lâchers de tourbillons de Karman, viennent perturber les pales 32 lors de leur passage dans le demi-disque aval au cours de leur rotation autour de l'axe A. De plus, la fréquence de ces lâchers, (adimensionnée par Vᵢ/a, où a est le diamètre de l'arbre, et appelée alors fréquence de Strouhal), poserait des problèmes à l'approche, Vᵢ croissant, de la fréquence propre d'un mât. Ces problèmes sont donc ici éliminés.

Chaque carénage-MMESS 42, 44 peut jouer également un rôle d'aile avec une contribution de moment piqueur.

De plus par les tubes structurels 64 circulent tous les circuits électriques de contrôle/commande des organes dans le carter de la génératrice comme le frein à disque, le câble électrique d'évacuation de la puissance collectée, et une possibilité d'accès pour les agents de maintenance au sein des carénages par des voies d'accès spécifiques (non représentées) en dehors des carénages. Une armoire de commande gérant les fonctions de l'éolienne via divers appareils électriques et automates programmables peut être installée au pied du pylône médian 28 et/ou au pied du mât 18.

Selon un mode de réalisation, pour chaque pale 32, une ligne de traction diagonale 66 anti-flexion relie une pièce annulaire 67 montée pivotante par un roulement ou palier spécifique autour de l'extrémité inférieure de l'élément supérieur 52 d'arbre vertical de guidage à la pale 32 à une hauteur située dans la moitié supérieure de celle-ci et une ligne de traction diagonale (non représentée) anti-flexion relie une pièce annulaire montée pivotante par un roulement ou palier spécifique autour de l'extrémité supérieure de l'élément inférieur 56 d'arbre vertical de guidage, à la pale 32 à une hauteur située dans la moitié supérieure de celle-ci. La ligne de traction 66 peut correspondre à un câble, un filin, une chaîne, un profilé, etc. Ces deux lignes, convenablement réparties sur la portion centrale 33 pour uniformiser la déformation de pale suivant une direction radiale, permet de lutter d'une part contre les forces centrifuges qui sont prépondérantes vis-à-vis des forces aérodynamiques (portance et traînée) en fonctionnement nominal et la ligne supérieure d'autre part de maintenir l'horizontalité des bras 34, 36 de la turbine 24 d'axe A qui tend à s'affaisser à chaque immobilisation de la turbine sous l'influence de la gravité.

Enfin, pour chaque turbine 24, des montants latéraux 68 verticaux externes profilés relient avantageusement les carénages-MMESS 42, 44 de la turbine 24 du côté de la turbine 24 opposée au plan médian.

Le pylône médian 28, la dérive 30 verticale, les montants latéraux 68 et les carénages 42, 44 peuvent être réalisés en des matériaux utilisés dans l'aéronautique pour la fabrication d'ailes, par exemple des matériaux composites.

Les figures 3A et 3B sont des vues agrandies en coupe, partielles et schématiques, respectivement de la partie haute et de la partie basse d'une éolienne flottante 10 avec des carénages-MMESS de l'une des turbines 24 représentées en figure 1.

Comme cela apparaît en figure 3A, le carénage supérieur 42 contient une liaison pivot 74 reliant le moyeu supérieur 50 à l'élément supérieur d'arbre 52. A titre d'exemple, la liaison pivot 74 est formée par des roulements.

Comme cela apparaît en figure 3B, le carénage inférieur 44 contient une liaison pivot 76 reliant le moyeu inférieur 54 à l'élément inférieur d'arbre 56. A titre d'exemple, la liaison pivot 76 est formée par des roulements. Le carénage inférieur 44 contient, en outre, la génératrice 80 qui évacue la puissance mécanique fournie par la turbine 24. Selon un mode de réalisation, la génératrice 80 est une génératrice synchrone à aimants permanents à attaque directe. Le stator 82 de la génératrice 80 comprend un bobinage 84 disposé sur un support 86 placé dans une enceinte 88 délimitée par la plaque 71, la pièce cylindrique 73 et le disque 55. Le rotor 90 de la génératrice 80 comprend une pièce cylindrique 92 d'axe A fixée au disque 55 solidaire du moyeu 54 et équipée d'aimants permanents 94 qui sont placés en regard du bobinage 84. Le rotor 90 peut, en outre, comprendre des nervures 95 de renfort. Le flux échangé entre le rotor 90 et le stator 82 est donc radial. La génératrice 80 synchrone à aimants permanents à attaque directe présente l'avantage de pouvoir fonctionner à vitesse variable, de ne pas requérir de multiplicateur qui serait encombrant dans le carénage inférieur 44 en augmentant son épaisseur, et de présenter une puissance massique élevée. La génératrice 80 doit être équipée d'un frein à disque 96 comprenant un disque 97 solidaire du rotor 55 et un étrier 98 fixé au carénage inférieur 44.

La figure 4 est une vue en perspective, partielle et schématique, d'un mode de réalisation d'une éolienne flottante 120 avec des carénages-HMESS supérieurs 126 et inférieurs 128.L'éolienne flottante 120 comprend l'ensemble des éléments de l'éolienne flottante 10 représentée sur la figure 1 à la différence que pour chaque turbine 24, le carénage-MMESS supérieur 42 ou inférieur 44 est remplacé par une structure de support supérieure 126 ou inférieure 128 d'encombrement réduit dite carénage-HMESS. De plus le montant-dérive 30 n'est pas présent.

Chaque carénage-HMESS, supérieur ou inférieur 126, 128, comprend une demi-aile (droite, en flèche, trapézoïdale, elliptique...) relié au pylône 28, et à l'extrémité de laquelle est aménagé une liaison pivotante (non visible) pour les turbines 24. Les carénages-HMESS supérieur et inférieur 126, 128 comprennent des éléments d'arbre supérieur et inférieur respectivement (non visibles). Des moyeux supérieurs 50 et inférieur 54 (partiellement visibles) sont montés tournant, par l'intermédiaire de roulements ou de paliers non visibles sur cette figure, sur lesdits éléments d'arbre supérieur et inférieur respectivement, une ouverture circulaire étant laissée pour les prolongements à l'extérieur des carénages-HMESS desdits moyeux. Des disques externes supérieur 51 et inférieur 55, fixés sur les parties externes desdits moyeux 50, 54, sont entrainés par les bras 34 et 36 des pales 32 de la turbine dont ils sont solidaires.

Dans ce mode de réalisation, les carénages-HMESS inférieur et supérieur 126, 128 assurent certaines fonctions communes (et en retirent les avantages subséquents) avec celles des carénages-MMESS représentés dans les figures 2A et 2B. D'abord la fonction de support est partiellement assurée par des tubes annulaires structurels allongés (non représentés) suivant l'envergure de chaque demi-aile, à proximité du bord d'attaque et reliés au pylône médian. La fonction de support est ensuite assurée par des moyens traditionnels (non représentés) utilisés dans les ailes d'avions : longerons parallèles à ces tubes, nervures et câbles internes.

Aux câbles internes peuvent venir s'ajouter, pour le carénage supérieure 126, des câbles externes d'un système de haubanage 130, comme cela est représenté dans la figure 4, reliant par le dessus des barres verticales au sommet du pylône 28 aux éléments d'arbre des demi-ailes et, pour le carénage inférieur 128, des barres externes 132 de soutien reliant par le dessous le pylône 28 aux éléments d'arbre des demi-ailes.

Ainsi, pour ce qui concerne le carénages-HMESS inférieur et supérieur, les tubes annulaires structurels offrent une possibilité d'accès pour les agents de maintenance aux organes de transmission de puissance mécanique produite par les pales au sein et en dehors des carénages. Enfin, pour ce qui concerne les seuls carénages-HMESS inférieur, lesdits tubes donnent en plus auxdits agents de maintenance, un accès aux circuits électriques de contrôle/commande des organes dans le carter de la génératrice comme le frein à disque, au câble électrique d'évacuation de la puissance collectée.

Il n'est enfin pas besoin d'arbre d'entrainement avec les avantages structurels et aérodynamiques partagés avec les carénages-MMESS.

Les carénages-HMESS, pour lesquels coudes 38, 40, et bras 34, 36 des pales 32 restent externes aux carénages, laissent à la forme même des pales 32 la fonction de réduire les trainées parasites. Les bras 34, 36 qui ne sont plus masqués peuvent subir une trainée plus intense qu'avec un carénage-MMESS. En revanche, l'ensemble formé par un coude 38, 40 à l'extrémité de la partie active 33 d'une pale 32 qui se prolonge par un bras 34, 36 perpendiculaire à l'axe A supérieur et inférieur peut lui-même être assimilé à une ailette marginale (winglet) de surface moindre que celle d'un carénage-MMESS. La trainée d'interférence peut être également réduite avec les carénages-HMESS en jouant sur le rayon de courbure du coude 38, 40. L'absence d'arbre central empêche également que des tourbillons, notamment des lâchers de tourbillons de Karman, viennent perturber les pales 32 lors de leur passage dans le demi-disque aval au cours de leur rotation autour de l'axe A. En conclusion, les avantages sur le plan de la réduction des trainées parasites obtenus en présence des carénages-HMESS et des carénages-MMESS restent globalement forts et comparables.

Ces avantages ont un impact significatif sur les puissances fournies par les turbines 24 soutenues par ces deux types de carénages munis de structure de support. En effet il devient possible, grâce à l'architecture générale de l'éolienne commune aux deux types de carénages, de maintenir les turbines par leurs extrémités haute et basse, sans empiéter sur leur zone de révolution, le pylône 28 commun de soutien des carénages étant extérieur à ces zones, et ainsi de marier avantageusement les caractéristiques des deux variantes principales des VAWT fonctionnant sur le principe des forces de portance. Aux turbines Darrieus est emprunté leur rendement résultant d'une solidité S réduite et de leur paramètre d'avance optimal λₒ élevé et aux turbines en H est emprunté un maitre-couple bien supérieur à celui des turbines Darrieus pour une hauteur donnée, provenant de leur forme rectangulaire maintenue en particulier par des lignes de traction.

Selon un mode de réalisation, pour lutter contre les forces centrifuges et gravitaires, il est toujours possible d'utiliser comme dans la figure 1 une ligne de traction diagonale 66 anti-flexion (non représentée dans cette figure 4) qui relie une pièce annulaire analogue à la pièce 67 représentée dans la figure 2 , mais fixée autour du centre du disque supérieure externe 51 à la pale 32 en un point d'attache situé dans la moitié supérieure de la pale. De manière avantageuse, une seconde ligne de traction diagonale (non représentée) peut relier une pièce annulaire fixée autour du centre du disque inférieur externe 55 à la pale 32 en un point d'attache situé dans la moitié inférieure de la pale 32. Il est à remarquer que les carénages-HMESS offre un mode d'attache sur la liaison pivot différent de celui décrit précédemment pour des carénages-MMESS. Pour ces derniers, le disque étant interne, il était donc nécessaire d'introduire un roulement supplémentaire autour du seul élément externe, l'extrémité inférieure de l'élément supérieur 52 d'arbre vertical fixe supportant le capot.

Selon un mode de réalisation, pour lutter contre les seules forces centrifuges, il est aussi possible d'introduire des lignes de traction anti-flexion, reliant un point situé au voisinage du milieu des pales 32 à un point situé sur l'axe de rotation, dans un plan horizontal. Pour une turbine à deux pales, telle que représentée en figure 4, ces lignes de flexion se réduisent à une ligne unique. Inversement cette solution peut être utilisée en présence carénages-MMESS.

Selon un mode de réalisation, chaque ligne de traction 68 ou chaque ligne de traction 66 de la figure 1, avec son complément sur la moitié inférieure de la pale 32, peut comprendre un câble recouvert d'un manchon profilé, le manchon s'étendant sensiblement sur toute la longueur du câble à l'exception des zones où le câble est en contact avec les pales 32. Le manchon peut être en polymère. Il peut avoir la forme d'un profil symétrique.

Aucune commande en lacet n'est nécessaire dans le mode de réalisation où est prévu un système de liaison au sommet du mât 18 décrit plus haut. Les résultantes des forces normales qu'exerce chaque turbine 24 sur les liaisons pivot portées par les carénages-HMESS 126, 128, s'équilibrent de même que les moments qu'elles créent en O. Le positionnement des axes A et A' en aval de l'axe de rotation O tend à stabiliser l'éolienne à chaque instant face au vent, sans mise en rotation. Le pylône 28 avantageusement allongé dans les éoliennes 120 avec des carénages-HMESS, atteignant par exemple la moitié du diamètre d'une turbine accentue de plus cette stabilisation face au vent. En effet, l'action du vent qui s'exerce sur la surface latérale du pylône qui se trouve (i) plus exposée au vent (ii) et disposée majoritairement à l'aval de l'axe O du pylône 28, joue un rôle d'empennage. Pour une troisième raison, la turbine 24 qui se trouve la plus exposée au vent masque conjointement, avec le pylône 28, la turbine 24 la moins exposée. La trainée globale qu'exerce le vent sur la première turbine 24 est supérieure à la traînée globale sur la deuxième turbine 24 et le couple résultant estimé au pied du pylône 28 est aussi un couple redresseur.

Dans le mode de réalisation où n'est pas prévu ledit système de liaison au sommet du mât 18, le support flottant de plateforme 14 représenté dans la figure 1 est soumis à ce moment aérodynamique de redressement qui s'ajoute à celui des caténaires qui contrôlent ce support flottant en lacet et contribuent à maintenir l'axe de symétrie de la turbomachine 12 parallèle à la direction du vent en fonctionnement normal.

Suivant le mode de réalisation représenté dans la figure 4, la turbine est munie de deux pales. Ce choix est très favorable pour stabiliser la turbine à la suite d'un arrêt d'urgence : il faut pour cela bloquer les deux turbines dans une configuration angulaire dans laquelle leur deux pales restent dans un plan contenant les axes de rotation des pales des turbines, configuration pour laquelle les forces motrices sont minimales, voire négatives.

Divers modes de réalisation avec diverses variantes ont été décrits ci-dessus. On notera que l'homme de l'art pourra combiner divers éléments de ces divers modes de réalisation et variantes sans faire preuve d'activité inventive.

## Revendications

1. Eolienne flottante (10) comprenant une plateforme flottante (14) et une turbomachine (12) reposant sur la plateforme, la turbomachine comprenant :
- des première et deuxième turbines (24) à axe vertical disposées de façon symétrique par rapport à un premier plan, chaque turbine comprenant un nombre N de pales (32) égal ou supérieur à 2 comprenant des parties centrales (33) et des bras profilés (34, 36), les axes (A, A') de rotation des pales des turbines étant contenue dans un deuxième plan perpendiculaire au premier plan, les parties centrales des pales décrivant en rotation des cylindres autour des axes (A, A'), et se prolongeant aux extrémités par les bras, les bras étant, en outre, reliés à des éléments d'arbre (52, 56) par des liaisons pivot (74, 76), les bras (34, 36) étant perpendiculaires aux axes de rotation (A, A') des pales (32), la partie centrale (33) de chaque pale (32) étant reliée à chaque bras (34, 36) via une portion coudée profilée (38, 40), ,dans laquelle, pour chaque pale (32), la hauteur de la partie centrale (33) de la pale mesurée parallèlement à l'axe de rotation (A, A') de la pale, est supérieure ou égale au 2/3 de la hauteur, mesurée parallèlement à l'axe de rotation (A, A') de la pale, entre les deux bras (34, 36) reliés à la partie centrale de la pale et dans laquelle chaque turbine est soutenue par deux carénages horizontaux supérieur et inférieur (42, 44 ; 126, 128) munis de structure de support et ne comprend pas d'arbre reliant solidairement les éléments d'arbre ; et
- une structure de maintien des turbines composée comprenant lesdits carénages horizontaux supérieur et inférieur munis des structures de support, reliés à un pylône (28) médian vertical entre les turbines.

2. Eolienne flottante selon la revendication 1, dans laquelle le rayon de courbure de chaque portion coudée (38, 40) s'écarte en tout point de moins de 5 % d'un rayon d'un quart de cercle.

3. Eolienne flottante selon la revendication 1 ou 2, dans laquelle le profil de chaque portion coudée (38, 40) assure une transition monotone des caractéristiques du profil de la partie centrale de pale à laquelle la portion coudée est reliée aux caractéristiques du profil du bras auquel la portion coudée est reliée.

4. Eolienne flottante selon l'une quelconque des revendications 1 à 3, dans laquelle les carénages horizontaux supérieur et inférieur de chaque turbine sont reliés à un pylône médian vertical entre les turbines de section sensiblement triangulaire et symétrique par rapport au plan médian, avec une surface amont par rapport à la direction du vent en arc de cercle et deux faces latérales planes ou concaves se rejoignant en aval vers une ligne de fuite contenue dans le plan médian. Ce pylône dans sa partie amont se raccorde au support flottant par un mât, sensiblement cylindrique, d'axe O placé en amont du deuxième plan contenant les axes de rotation des pales des turbines

5. Eolienne flottante selon l'une quelconque des revendications 1 à 4, dans laquelle chaque turbine (24) comprend une ligne de traction diagonale (66) qui relie chaque pale (32), à partir d'un point situé dans la moitié supérieure de la pale, à un composant de la liaison pivot supérieure de la turbine et une seconde ligne de traction diagonale qui relie chaque pale (32), à partir d'un point situé dans la moitié inférieure de la pale, à un composant tournant de la liaison pivot inférieure de la turbine.

6. Eolienne flottante selon l'une quelconque des revendications 1 à 4, dans laquelle chaque turbine (24) comprend une ligne de traction horizontale qui relie chaque pale (32) de la turbine aux autres pales de la turbine via un noeud commun placé sur l'axe de rotation la turbine à une hauteur située au voisinage de la moitié de la pale.

7. Eolienne flottante selon la revendication 5 ou 6, dans laquelle chaque ligne de traction est recouverte d'un manchon profilé, le manchon s'étendant sensiblement sur toute la longueur de la ligne de traction à l'exception des zones où la ligne de traction est en contact avec les pales (32).

8. Eolienne flottante selon l'une quelconque des revendications 1 à 7, dans laquelle les parties centrales des pales (32) décrivent en rotation des cylindres de diamètre D sont de solidité S =2Nc/D inférieure à 0,2, c étant la corde des profils des pales.

9. Eolienne flottante selon l'une quelconque des revendications 1 à 8, dans laquelle le pylône (28) se prolonge par une portion cylindrique d'axe O qui joue le rôle de la partie mâle de la liaison pivot et qui pénètre dans une ouverture cylindrique d'axe O prévue dans un mât (18) et qui joue le rôle de la partie femelle d'une liaison pivot par laquelle la turbomachine (12) est adaptée à pivoter par rapport à la plateforme flottante (14).

10. Eolienne flottante selon l'une quelconque des revendications 1 à 9, dans laquelle chaque carénage horizontal (42, 44 ; 126, 128) muni d'une structure de support, supérieur et inférieur, est formé par une demi-aile à l'extrémité et au sein de laquelle est aménagée une liaison pivotante comprenant un élément d'arbre fixe, un moyeu tournant (50, 54) se prolongeant à l'extérieur de la demi-aile et sur lequel viennent se rattacher extérieurement par un disque (51, 55) les bras (34, 36) des pales (32) de la turbine (24).

11. Eolienne flottante selon la revendication 10, dans laquelle la structure de support de chaque carénage (42, 44 ; 126, 128) comprend des longerons, nervures et câbles internes au carénage et un tube annulaire structurel allongé suivant l'envergure de chaque demi-aile, à proximité du bord d'attaque et relié au pylône (28).

12. Eolienne flottante selon la revendication 11, comprenant pour le carénage supérieur des lignes de traction externes d'un système de haubanage qui relient des supports au sommet du pylône aux éléments d'arbre des demi-ailes et pour le carénage inférieur des barres externes de soutien qui relient le pylône aux éléments d'arbre des demi-ailes.

13. Eolienne flottante selon la revendication 11 ou 12, dans laquelle le tube annulaire de structure est adapté au passage d'un agent de maintenance.

14. Eolienne flottante selon l'une quelconque des revendications 1 à 9, dans laquelle chaque carénage (42, 44 ; 126, 128) horizontal supérieur et inférieur, muni d'une structure de support, est formé par un ellipsoïde de révolution aplati logeant et masquant au vent une liaison pivot en son centre, comprenant un élément d'arbre fixe (52, 56) fixé à l'intérieur du carénage, un moyeu (50, 54) tournant autour dudit élément d'arbre, les bras (34, 36) des pales (32) de la turbine (24) raccordés à un disque tournant (51, 55) solidaire du moyeu tournant et une fraction, variant entre la moitié et la totalité, des portions coudées (38, 40) des pales de la turbine.

15. Eolienne flottante selon la revendication 14, dans laquelle chaque carénage (42, 44) de la turbine comprend un logement (46, 48) partiellement fermé par un capot (58, 60) fixé à l'élément d'arbre (52, 56) du carénage, une ouverture annulaire (62) étant laissée entre le pourtour du capot et le reste du carénage pour le passage des pales (32) de la turbine.

16. Eolienne selon la revendication 14 ou 15, dans laquelle la structure (26) de maintien comprend un montant-dérive (30) dans le premier plan médian en aval du deuxième plan par rapport à la direction du vent.

17. Eolienne flottante selon l'une quelconque des revendications 14 à 16, dans laquelle la structure de support de chaque carénage (42, 44) comprend un tube annulaire (70) relié par un premier tube de structure (64) au pylône médian (28) et par un deuxième tube de structure (64) au montant-dérive (30).

18. Eolienne flottante selon la revendication 17, dans laquelle le premier tube de structure (64) est adapté au passage d'un agent de maintenance.

19. Eolienne flottante selon l'une quelconque des revendications 1 à 18, dans laquelle chaque turbine (24) comprend une génératrice électrique (80) entraînée par les pales (32) de la turbine logé dans ou sous le carénage horizontal inférieur munis de sa structure de support.

20. Eolienne flottante selon la revendication 19, dans laquelle la génératrice (80) est une génératrice synchrone à aimants permanents à attaque directe.

21. Eolienne flottante selon la revendication 19 ou 20, dans laquelle la génératrice (80) comprend un frein à disque (96).

22. Eolienne flottante selon la revendication 19 dans son rattachement à la revendication 17, dans laquelle des câbles d'évacuation de l'électricité produite par la génératrice (80) et/ou de contrôle et/ou de commande de la génératrice (80) et/ou du frein à disque sont agencés dans les tubes de structure (64).

23. Eolienne flottante selon l'une quelconque des revendications 1 à 22, dans laquelle chaque pale (32) est fabriquée en matériau composite utilisant des fibres de carbone.

24. Eolienne flottante selon l'une quelconque des revendications 1 à 23, dans laquelle chaque pale (32) est fabriquées en panneaux suivant la partie centrale, les bras supérieurs et inférieurs, les coudes supérieurs et inférieurs étant fabriqués séparément.

25. Eolienne flottante selon la revendication 24, dans laquelle ces panneaux sont ensuite raccordés sur site pour reconstituer l'aile.

## Patentansprüche

1. Schwimmfähige Windkraftanlage (10), enthaltend eine schwimmfähige Plattform (14) und eine auf der Plattform aufliegende Turbomaschine (12), wobei die Turbomaschine das Folgende enthält:
- eine erste und eine zweite Vertikalachsenturbine (24), die symmetrisch zu einer ersten Ebene angeordnet sind, wobei jede Turbine eine Anzahl N von Schaufeln (32) gleich oder größer als 2 enthält, die Mittelteile (33) und profilierte Arme (34, 36) aufweisen, wobei die Drehachsen (A, A') der Turbinenschaufeln in einer zweiten Ebene senkrecht zu der ersten Ebene verlaufen, wobei die Mittelteile der Schaufeln bei Drehung Zylinder um die Achsen (A, A') beschreiben und sich an den Enden über die Arme fortsetzen, wobei die Arme ferner über Schwenkverbindungen (74, 76) mit Wellenelementen (52, 56) verbunden sind, wobei die Arme (34, 36) senkrecht zu den Drehachsen (A, A') der Schaufeln (32) verlaufen, wobei der Mittelteil (33) einer jeden Schaufel (32) über einen profilierten gebogenen Abschnitt (38, 40) mit jedem Arm (34, 36) verbunden ist, wobei bei jeder Schaufel (32) die Höhe des Mittelteils (33) der Schaufel, gemessen parallel zur Drehachse (A, A') der Schaufel, größer oder gleich 2/3 der Höhe, gemessen parallel zur Drehachse (A, A') der Schaufel, zwischen den beiden Armen (34, 36) ist, die mit dem Mittelteil der Schaufel verbunden sind, und wobei jede Turbine von zwei horizontalen Verkleidungen (42, 44; 126, 128), nämlich einer oberen und einer unteren, gestützt wird, die mit Tragstrukturen ausgestattet sind, und keine die Wellenelemente fest verbindende Welle enthält; und
- eine Turbinenhalterungsstruktur, die aus der oberen und der unteren horizontalen Verkleidung besteht, die mit Tragstrukturen versehen sind und mit einem vertikalen mittleren Pylon (28) zwischen den Turbinen verbunden sind.

2. Schwimmfähige Windkraftanlage nach Anspruch 1, wobei der Krümmungsradius jedes gebogenen Abschnitts (38, 40) an jedem Punkt um weniger als 5% von einem Radius eines Viertelkreises abweicht.

3. Schwimmfähige Windkraftanlage nach Anspruch 1 oder 2, wobei das Profil eines jeden gebogenen Abschnitts (38, 40) einen monotonen Übergang der Profilcharakteristika des Schaufelmittelteils, mit dem der gebogene Abschnitt verbunden ist, zu den Profilcharakteristika des Arms sicherstellt, mit dem der gebogene Abschnitt verbunden ist.

4. Schwimmfähige Windkraftanlage nach einem der Ansprüche 1 bis 3, wobei die obere und die untere horizontale Verkleidung jeder Turbine mit einem vertikalen mittleren Pylon zwischen den Turbinen mit im Wesentlichen dreieckigem Querschnitt und symmetrisch zur Mittelebene verbunden sind, wobei eine in Bezug auf die Windrichtung stromaufwärts gerichtete Fläche als Kreisbogen vorliegt und zwei flache oder konkave Seitenflächen stromabwärts zu einer in der Mittelebene enthaltenen Abströmlinie hin aufeinandertreffen, wobei dieser Pylon in seinem stromaufwärts gerichteten Teil an den schwimmfähigen Träger über einen im Wesentlichen zylindrischen Mast mit Achse O anschließt, der stromaufwärts der zweiten Ebene angeordnet ist, die die Drehachsen der Turbinenschaufeln enthält.

5. Schwimmfähige Windkraftanlage nach einem der Ansprüche 1 bis 4, wobei jede Turbine (24) eine diagonale Zugleitung (66), die jede Schaufel (32) von einem Punkt in der oberen Schaufelhälfte mit einer Komponente der oberen Schwenkverbindung der Turbine verbindet, und eine zweite diagonale Zugleitung enthält, die jede Schaufel (32) von einem Punkt in der unteren Schaufelhälfte mit einer rotierenden Komponente der unteren Schwenkverbindung der Turbine verbindet.

6. Schwimmfähige Windkraftanlage nach einem der Ansprüche 1 bis 4, wobei jede Turbine (24) eine horizontale Zugverbindung enthält, die jede Turbinenschaufel (32) mit den weiteren Turbinenschaufeln über einen gemeinsamen Knoten verbindet, der auf der Turbinendrehsachse in einer Höhe nahe der Hälfte der Schaufel angeordnet ist.

7. Schwimmfähige Windkraftanlage nach Anspruch 5 oder 6, wobei jede Zugverbindung mit einer profilierten Hülse abgedeckt ist, wobei sich die Hülse im Wesentlichen über die gesamte Länge der Zugverbindung erstreckt, außer in Bereichen, in denen die Zugverbindung mit den Schaufeln (32) in Kontakt steht.

8. Schwimmfähige Windkraftanlage nach einem der Ansprüche 1 bis 7, wobei die Mittelteile der Schaufeln (32), die bei Drehung Zylinder mit dem Durchmesser D beschreiben, eine Festigkeit S = 2Nc/D von weniger als 0,2 haben, wobei c die Sehne der Schaufelprofile ist.

9. Schwimmfähige Windkraftanlage nach einem der Ansprüche 1 bis 8, wobei der Pylon (28) sich über einen zylindrischen Abschnitt mit einer Achse O fortsetzt, der als Einsteckteil der Schwenkverbindung fungiert und in eine in einem Mast (18) vorgesehene zylindrische Öffnung mit Achse O eintritt, die als Aufnahmeteil einer Schwenkverbindung fungiert, über welche die Turbomaschine (12) in Bezug auf die schwimmfähige Plattform (14) schwenkbar ist.

10. Schwimmfähige Windkraftanlage nach einem der Ansprüche 1 bis 9, wobei jede horizontale Verkleidung (42, 44; 126, 128), die obere und die untere, die mit einer Tragstruktur ausgestattet ist, die aus einem Halbflügel gebildet ist, an dessen Ende und innerhalb dem eine Schwenkverbindung ausgebildet ist, die ein festes Wellenelement enthält, wobei sich eine rotierende Nabe (50, 54) außerhalb des Halbflügels fortsetzt, an der außen über eine Scheibe (51, 55) die Arme (34, 36) der Schaufeln (32) der Turbine (24) befestigt sind.

11. Schwimmfähige Windkraftanlage nach Anspruch 10, wobei die Tragstruktur einer jeden Verkleidung (42, 44; 126, 128) Längsträger, Rippen und Kabel innerhalb der Verkleidung und ein ringförmiges Strukturrohr enthält, das entsprechend der Spannweite jedes Halbflügels nahe der Anströmkante verläuft und mit dem Pylon (28) verbunden ist.

12. Schwimmfähige Windkraftanlage nach Anspruch 11, enthaltend für die obere Verkleidung äußere Zugverbindung eines Abspannsystems, das Halterungen an der Spitze des Pylon mit den Wellenelementen der Halbflügel verbindet, und für die untere Verkleidung äußere Stützstäbe, die den Pylon mit den Wellenelementen der Halbflügel verbinden.

13. Schwimmfähige Windkraftanlage nach Anspruch 11 oder 12, wobei das ringförmige Strukturrohr für den Durchgang eines Wartungsdienstes ausgelegt ist.

14. Schwimmfähige Windkraftanlage nach einem der Ansprüche 1 bis 9, wobei jede horizontale Verkleidung (42, 44; 126, 128), die obere und die untere, die mit einer Tragstruktur versehen ist, durch ein abgeflachtes Rotationsellipsoid gebildet ist, das in seinem Zentrum eine Schwenkverbindung aufnimmt und vor Wind abschirmt und ein festes Wellenelement (52, 56), das innerhalb der Verkleidung befestigt ist, eine Nabe (50, 54), die sich um das Wellenelement dreht, die Arme (34, 36) der Schaufeln (32) der Turbine (24), die mit einer rotierenden Scheibe (51, 55) verbunden sind, die fest mit der rotierenden Nabe verbunden ist, und einen zwischen der Hälfte und der Gesamtheit variierenden Anteil der gebogenen Abschnitte (38, 40) der Turbinenschaufeln enthält.

15. Schwimmfähige Windkraftanlage nach Anspruch 14, wobei jede Turbinenverkleidung (42, 44) eine Aufnahme (46, 48) aufweist, die mit einer am Wellenelement (52, 56) der Verkleidung befestigte Haube (58, 60) teilweise verschlossen ist, wobei eine ringförmige Öffnung (62) zwischen dem Umfang der Haube und der restlichen Verkleidung für den Durchtritt der Turbinenschaufeln (32) freigelassen ist.

16. Schwimmfähige Windkraftanlage nach Anspruch 14 oder 15, wobei die Halterungsstruktur (26) eine Driftstütze (30) in der ersten Mittelebene stromabwärts der zweiten Ebene in Bezug auf die Windrichtung enthält.

17. Schwimmfähige Windkraftanlage nach einem der Ansprüche 14 bis 16, wobei die Tragstruktur einer jeden Verkleidung (42, 44) ein ringförmiges Rohr (70) enthält, das über ein erstes Strukturrohr (64) mit dem mittleren Pylon (28) und über ein zweites Strukturrohr (64) mit der Driftstütze (30) verbunden ist.

18. Schwimmfähige Windkraftanlage nach Anspruch 17, wobei das erste Strukturrohr (64) für den Durchgang eines Wartungsdienstes ausgelegt ist.

19. Schwimmfähige Windkraftanlage nach einem der Ansprüche 1 bis 18, wobei jede Turbine (24) einen elektrischen Generator (80) enthält, der über die Turbinenschaufeln (32) angetrieben wird und in oder unter der unteren horizontalen Verkleidung aufgenommen ist, die mit ihrer Tragstruktur versehen ist.

20. Schwimmfähige Windkraftanlage nach Anspruch 19, wobei der Generator (80) ein Synchrongenerator mit Permanentmagneten und Direktantrieb ist.

21. Schwimmfähige Windkraftanlage nach Anspruch 19 oder 20, wobei der Generator (80) eine Scheibenbremse (96) enthält.

22. Schwimmfähige Windkraftanlage nach Anspruch 19 in Abhängigkeit von Anspruch 17, wobei in den Strukturrohren (64) Kabel zum Ableiten der vom Generator (80) erzeugten Elektrizität und/oder zum Steuern und/oder Betätigen des Generators (80) und/oder der Scheibenbremse angeordnet sind.

23. Schwimmfähige Windkraftanlage nach einem der Ansprüche 1 bis 22, wobei jede Schaufel (32) aus Verbundmaterial unter Verwendung von Kohlenstofffasern hergestellt ist.

24. Schwimmfähige Windkraftanlage nach einem der Ansprüche 1 bis 23, wobei jede Schaufel (32) aus Platten entlang des Mittelteils hergestellt ist, wobei die oberen und unteren Arme und die oberen und unteren Bogenabschnitte separat hergestellt sind.

25. Schwimmfähige Windkraftanlage nach Anspruch 24, wobei diese Platten dann vor Ort verbunden werden, um den Flügel zusammenzustellen.

## Claims

1. Floating wind turbine (10) comprising a floating platform (14) and a turbine engine (12) resting on the platform, the turbine engine comprising:
- first and second vertical-axis turbines (24) arranged symmetrically with respect to a first plane, each turbine comprising a number N of blades (32) equal to or greater than 2 comprising central parts (33) and profiled arms (34, 36); the axes of rotation (A, A') of the blades of the turbines being contained in a second plane perpendicular to the first plane, the central parts of the blades in rotation describing cylinders around the axes (A, A') and being extended at the ends by the arms, the arms also being linked to axle elements (52, 56) by pivot linkages (74, 76), the arms (34, 36) being perpendicular to the axes of rotation (A, A') of the blades (32), the central part (33) of each blade (32) being linked to each arm (34, 36) via a profiled elbow portion (38, 40), in which, for each blade (32), the height of the central part (33) of the blade measured parallel to the axis of rotation (A, A') of the blade, is greater than or equal to 2/3 of the height, measured parallel to the axis of rotation (A, A') of the blade, between the two arms (34, 36) linked to the central part of the blade and in which each turbine is supported by two horizontal fairings, upper and lower (42, 44; 126, 128) equipped with support structure and does not comprise a shaft linking the axle elements together; and
- a structure for bearing the turbines composed comprising said upper and lower horizontal fairings equipped with support structures, linked to a vertical median pylon (28) between the turbines.

2. Floating wind turbine according to claim 1, in which the radius of curvature of each elbow portion (38, 40) at any point deviates by less than 5% from a radius of one quarter-circle.

3. Floating wind turbine according the claim 1 or 2, in which the profile of each elbow portion (38, 40) provides a monotonic transition from the characteristics of the profile of the central part of the blade to which the elbow portion is linked, to the characteristics of the profile of the arm to which the elbow portion is linked.

4. Floating wind turbine according to any one of claims 1 to 3, in which the upper and lower horizontal fairings of each turbine are linked to a vertical median pylon between the turbines having a substantially triangular cross section that is symmetrical with respect to the median plane, with an upstream surface with respect to the wind direction in an arc of a circle and two flat or concave lateral faces meeting downstream towards a vanishing line contained in the median plane. In its upstream part this pylon is connected to the floating support by a substantially cylindrical tower with axis 0 placed upstream of the second plane containing the axes of rotation of the blades of the turbines.

5. Floating wind turbine according to any one of claims 1 to 4, in which each turbine (24) comprises a diagonal traction line (66) that links each blade (32), from a point situated within the upper half of the blade, to a component of the upper pivot linkage of the turbine and a second diagonal traction line that links each blade (32), from a point situated within the lower half of the blade, to a rotating component of the lower pivot linkage of the turbine.

6. Floating wind turbine according to any one of claims 1 to 4, in which each turbine (24) comprises a horizontal traction line that links each blade (32) of the turbine to the other blades of the turbine via a common node placed on the axis of rotation of the turbine at a height situated near to halfway along the blade.

7. Floating wind turbine according to claim 5 or 6, in which each traction line is covered with a profiled sleeve, the sleeve extending substantially over the entire length of the traction line with the exception of the zones where the traction line is in contact with the blades (32).

8. Floating wind turbine according to any one of claims 1 to 7, in which when rotating, the central parts of the blades (32) describe cylinders of diameter D and have solidity S = 2Nc/D less than 0.2, c being the chord of the profiles of the blades.

9. Floating wind turbine according to any one of claims 1 to 8, in which the pylon (28) is extended by a cylindrical portion with axis 0 that acts as the male part of the pivot linkage and that enters a cylindrical opening with axis 0 provided in a tower (18) that acts as the female part of a pivot linkage by means of which the turbine engine (12) is suitable for pivoting with respect to the floating platform (14) .

10. Floating wind turbine according to any one of claims 1 to 9, in which each horizontal fairing (42, 44; 126, 128) equipped with an upper and lower support structure is formed by a half-foil at the end and within which is arranged a pivot linkage comprising a fixed axle element, a rotating hub (50, 54) extending outside the half-foil and on which the arms (34, 36) of the blades (32) of the turbine (24) are attached externally via a disk (51, 55).

11. Floating wind turbine according to claim 10, in which the support structure of each fairing (42, 44; 126, 128) comprises spars, ribs and cables internal to the fairing and an elongated annular structural tube in function of the breadth of each half-foil, close to the leading edge and linked to the pylon (28).

12. Floating wind turbine according to claim 11, comprising for the upper fairing, external traction lines of a guying system that links from the supports at the apex of the pylon to the axle elements of the half-foils and for the lower fairing, external supporting bars that link the pylon to the axle elements of the half-foils.

13. Floating wind turbine according to claim 11 or 12, in which the annular structural tube is suitable for a maintenance agent to pass through.

14. Floating wind turbine according to any one of claims 1 to 9, in which each upper and lower horizontal fairing (42, 44; 126, 128) equipped with a support structure, is formed by flattened ellipsoid of revolution at its centre housing and sheltering from the wind a pivot linkage, comprising a fixed axle element (52, 56), fixed inside the fairing, a hub (50, 54) rotating about said axle element, the arms (34, 36) of the blades (32) of the turbine (24) connected to a rotating disk (51, 55) forming a single piece with the rotating hub and a fraction, varying between one half and the whole, of the elbow portions (38, 40) of the blades of the turbine.

15. Floating wind turbine according to claim 14, in which each fairing (42, 44) of the turbine comprises a housing (46, 48) partially closed by a cowl (58, 60) fixed to the axle element (52, 56) of the fairing, an annular opening (62) being left between the edge of the cowl and the rest of the fairing for the blades (32) of the turbine to pass through.

16. Wind turbine according to claim 14 or 15, in which the bearing structure (26) comprises a vertical stabilizer strut (30) in the first median plane downstream of the second plane with respect to the wind direction.

17. Floating wind turbine according to any one of claims 14 to 16, in which the support structure of each fairing (42, 44) comprises an annular tube (70) linked by a first structural tube (64) to the median pylon (28) and by a second structural tube (64) to the vertical stabilizer strut (30).

18. Floating wind turbine according to claim 17, in which the first structural tube (64) is suitable for a maintenance agent to pass through.

19. Floating wind turbine according to any one of claims 1 to 18, in which each turbine (24) comprises an electric generator (80) driven by the blades (32) of the turbine housed in or under the lower horizontal fairing equipped with the support structure thereof.

20. Floating wind turbine according to claim 19, in which the generator (80) is a direct-driven permanent magnet synchronous generator.

21. Floating wind turbine according to claim 19 or 20, in which the generator (80) comprises a disk brake (96).

22. Floating wind turbine according to claim 19 in conjunction with claim 17, in which cables for evacuation of the electricity produced by the generator (80) and/or for monitoring and/or controlling the generator (80) and/or the disk brake are arranged in the structural tubes (64).

23. Floating wind turbine according to any one of claims 1 to 22, in which each blade (32) is produced from a composite material using carbon fibres.

24. Floating wind turbine according to any one of claims 1 to 23, in which each blade (32) is produced in panels, the central part, the upper and lower arms, with the upper and lower elbows being produced separately.

25. Floating wind turbine according to claim 24, in which the panels are then connected together on site in order to reconstitute the foil.
